# EUROPÄISCHE PATENTANMELDUNG

(11) **EP 3 300 792 A2**
(43) Veröffentlichungstag der Anmeldung: **04.04.2018**
(21) Anmeldenummer: 17175230.6
(22) Anmeldetag: 09.06.2017
(51) Int. Cl.: B01D 71/02, B01D 67/00, B01D 33/23, B01D 29/41, B01D 63/08, B01D 63/16, B01D 69/12

(54) **VERFAHREN ZUR HERSTELLUNG EINER KERAMISCHEN FILTRATIONSSCHEIBE**

(30) Priorität: 28.09.2016 DE 102016011672
(71) Anmelder: Rauschert Kloster Veilsdorf GmbH, 98669 Veilsdorf (DE)
(72) Erfinder: Maurer, Michael, 98669 Kloster Veilsdorf (DE); Pittruff, Peter, 96358 Teuschnitz (DE); Metzler, Dr. Richard, 96332 Pressig (DE)
(74) Vertreter: Behr, Wolfgang

(57) **Zusammenfassung**

Die vorliegende Anmeldung betrifft ein Verfahren zur Herstellung einer keramischen Filtrationsscheibe, welche einen porösen keramischen Grundkörper und eine auf den Außenseiten des Grundkörpers angeordnete keramische Membran aufweist, wobei die keramische Filtrationsscheibe eine Axialbohrung aufweist, welche den Permeat-Abfluss der Filtrationsscheibe bildet, wobei in einem ersten Schritt der Grundkörper geformt und gesintert wird, und dass in einem zweiten Schritt die Membran in einer oder mehreren Schichten als Schlicker auf den bereits gesinterten Grundkörper aufgebracht und zusammen mit dem Grundkörper nochmals gesintert wird.

## Beschreibung

Die vorliegende Erfindung betrifft keramische Filtrationselemente und Verfahren zu deren Herstellung.

Für die Filtration von Flüssigkeiten werden verbreitet keramische Filtrationsmembranen eingesetzt. Dabei existieren folgende zwei unterschiedliche Technologien:
Bei Rohrmembranen wird die Flüssigkeit durch die mit einer Membran beschichteten inneren Kanäle eines porösen keramischen Rohres gepumpt. Das Permeat durchdringt die Membran von innen nach außen. Das Retentat verbleibt im Inneren des Rohres. Der Grundkörper des Rohres, auf welchem die Membran aufgebracht ist, wird dabei üblicherweise in Strangpressverfahren hergestellt.

Bei Flachmembranen wird die Flüssigkeit durch die mit einer Membran beschichtete Außenhaut eines porösen keramischen Körpers gepumpt. Das Permeat durchdringt die Membran von außen nach innen. Das Retentat verbleibt außerhalb der Membran.

Als Grundkörper für Flachmembranen werden nach dem Stand der Technik zum einen im Strangpressverfahren extrudierte Platten eingesetzt, welche durch das Strangpressverfahren ein Profil mit im Inneren der Platte verlaufenden Kanälen zum Ableiten des Permeats erhalten. Das Permeat tritt bei diesen Platten daher seitlich aus dem Plattenkörper aus.

Weiterhin sind keramische Filtrationsscheiben bekannt, welche eine Axialbohrung aufweisen, die als Permeat-Abfluss der Filtrationsscheibe dient. Solche Filtrationsscheiben können auf einer Welle aufgebracht und in Rotation versetzt werden, um die Filtrationsleistung zu verbessern. Der Abfluss des Permeats erfolgt dann über die Welle. Solche keramischen Filtrationsscheiben sind auf der DE 43 301 63 C2, der DE 19 624 176 C2 und der EP 2 543 420 A1 bekannt. Die Herstellung der Filtrationsscheiben erfolgt durch Lamination mehrerer keramischer Folien. Die jeweils äußeren Folien bilden die Membranen, und eine innere Folie bildet einen Grundkörper, welcher der Ableitung des Permeats dient. Die keramischen Folien werden dabei als ungesinterte Grünfolien miteinander laminiert, und der so entstehende laminierte Grünkörper gesintert. Bei der DE 43 301 63 C2 werden in der den Grundkörper bildenden inneren keramischen Folie durch Ausstanzen innere Kanäle gebildet, welche der Ableitung des Permeats dienen. Bei der DE 19 624 176 C2 weist die den Grundkörper bildende mittlere Keramikschicht eine so grobe Porenstruktur auf, dass das Permeat auch ohne innere Kanäle abgeleitet werden kann.

Solche keramischen Filtrationsscheiben ermöglichen eine verfahrenstechnisch besonders einfache Filtration, da durch die Rotation der Filtrationsscheiben die Entstehung von festhaftenden Anbackungen auf der Membran minimiert werden kann. Weiterhin kann die Filtration bereits bei relativ niedrigen Drücken erfolgen. Allerdings ist die Herstellung der bekannten keramischen Filtrationsscheiben aufwendig, teuer und im Hinblick auf die erzeugbare Geometrie der Filtrationsscheiben eingeschränkt.

Aufgabe der vorliegenden Erfindung ist es daher, ein verbessertes Verfahren zur Herstellung einer keramischen Filtrationsscheibe zur Verfügung zu stellen. Weiterhin ist es eine Aufgabe der vorliegenden Erfindung, verbesserte Filtrationsscheiben zur Verfügung zu stellen.

Die vorliegende Erfindung umfasst hierfür in einem ersten Aspekt ein Verfahren zur Herstellung einer keramischen Filtrationsscheibe, welche einen porösen keramischen Grundkörper und eine auf den Außenseiten des Grundkörpers angeordnete keramische Membran aufweist, wobei die keramische Filtrationsscheibe eine Axialbohrung aufweist, welche den Permeat-Abfluss der Filtrationsscheibe bildet. Erfindungsgemäß erfolgt die Herstellung dadurch, dass in einem ersten Schritt der Grundkörper geformt und gesintert wird, und dass in einem zweiten Schritt die Membran in eine oder mehreren Schichten als Schlicker auf den bereits gesinterten Grundkörper aufgebracht und zusammen mit dem Grundkörper nochmals gesintert wird. Hierdurch ergibt sich im Vergleich zur Herstellung der Filtrationsscheibe aus einem Laminat ungesinterter Grünfolien ein erheblich kostengünstigerer Herstellungsprozess. Weiterhin wird durch die separate Formung des Grundkörpers die Flexibilität bei der Formgebung erheblich erhöht.

In einer ersten Ausführungsform der vorliegenden Erfindung wird der Grundkörper im Gießverfahren hergestellt. Bevorzugt wird der Grünkörpers für den Grundkörper dabei im Gießverfahren aus einem Keramikschaum hergestellt. Durch die Herstellung aus einem Keramikschaum ist es möglich, einen Grundkörper mit einer hohen Porosität zur Verfügung zu stellen.

Insbesondere kann dabei ein keramischer Schlicker mit einem Porosierungsmittel gemischt und in eine Gießform eingebracht werden, um den porösen Grundkörper als eine Schaumstruktur im Gießverfahren herzustellen.

Bevorzugt erfolgt die Herstellung aus Keramikschaum dadurch, dass ein keramischer Schlicker eingesetzt wird, welcher durch Zumischung von Metallpasten und/oder Metallpulvern zu einem Keramikschaum aufschäumt. Bevorzugt wird dabei eine schlickerförmige Masse auf Aluminiumoxidbasis und/oder Aluminiumsilikatbasis unter Verwendung von γ - Al₂O₃ und üblichen Verflüssigungs-, Modifizierungs- und/oder Bindemitteln hergestellt, die Masse in einem Temperaturbereich zwischen 10°C und 100°C und pH-Werten von 5 bis 10 mit einer oder mehreren Metallpasten oder Metallpulvern gemischt, und das entstehende Gemisch in eine Gießform eingebracht. Bevorzugt wird erfindungsgemäß eine poröse und/oder saugfähige Gießform eingesetzt.

Bevorzugt erfolgt die Herstellung im Gießverfahren so, wie dies in der DE 10 2008 015 271 A1 beschrieben ist. Das dort beschriebene Verfahren wird daher vollumfänglich zum Gegenstand der vorliegenden Anmeldung gemacht.

In einer alternativen Ausführungsform der vorliegenden Erfindung erfolgt die Herstellung des Grundkörpers im Trockenpressverfahren. Bevorzugt erfolgt dabei die Herstellung des Grünkörpers für den Grundkörper im Trockenpressverfahren aus einem keramischen Granulat. Insbesondere wird das keramische Granulat in einer Presse durch Druck verdichtet. Insbesondere handelt es sich dabei um eine uniaxiale Presse.

Bevorzugt besteht das Granulat aus Hohlkugeln. Bevorzugt weisen diese einen Durchmesser zwischen 0,5 mm und 4 mm, weiter bevorzugt zwischen 1 mm und 2 mm auf.

Bevorzugt wird zur Herstellung des Granulats zunächst ein keramisches Pulver mit organischen Additiven vermischt und in ein Sprüh-Trocknungsverfahren zu Granulat verarbeitet. Besonders bevorzugt wird die Mischung aus dem keramischen Pulver und den organischen Additiven mit Wasser verflüssigt und über eine Düse in einen Edelstahlturm gesprüht, in welchem bevorzugt eine Temperatur zwischen 100°C und 200°C herrscht. In der heißen Luft verdampft das Wasser, sodass sich ein Granulat in Form von Hohlkugeln bildet. Insbesondere entsteht so ein rieselfähiges und verdichtungsfähiges Material.

Im Rahmen der Herstellung des Grundkörpers wird das Granulat in eine Pressform gefüllt. Insbesondere handelt es sich dabei um eine Metallform. Die Pressform befindet sich in einem Pressautomaten, welcher die beiden Hälften der Form zusammenpresst. Anschließend fährt die Presse in eine geöffnete Stellung, und in der Pressform integrierte Auswerferstifte heben das gepresste Formteil aus der Pressform. Dieser Prozess kann sehr schnell ablaufen und ist gut automatisierbar, und somit ideal für eine Massenfertigung geeignet.

Ein so im Gießverfahren oder im Trockenpressverfahren hergestellter Grünkörper wird dann zunächst gesintert, bevor in einem zweiten Schritt eine oder mehrere Schichten Schlicker auf den bereits gesinterten Grundkörper aufgebracht und zusammen mit dem Grundkörper nochmals gesintert wird bzw. werden, um die Membran zu erzeugen.

Auch unabhängig von der Art der Herstellung des Grundkörpers wird die Membran bevorzugt im Tauchverfahren auf den Grundkörper aufgebracht. Hierdurch ergibt sich eine besonders einfache Möglichkeit, die die Membran bildenden Schlickerschichten auf den gesinterten Grundkörper aufzubringen.

Der Grünkörper des Grundkörpers wird bevorzugt bei einer Temperatur zwischen 1.200°C und 2.000°C gesintert, weiter bevorzugt zwischen 1.200°C und 1.800°C. Bevorzugt erfolgt das Sintern des mit der Membran versehenen Grundkörpers bei der gleichen oder bei einer niedrigeren Temperatur als das Sintern des Grünkörpers des Grundkörpers.

Durch das erfindungsgemäße Herstellungsverfahren kann die keramische Filtrationsscheibe erheblich kostengünstiger hergestellt werden, als gemäß dem Stand der Technik. Hierdurch werden für keramische Filtrationsscheiben weitere Anwendungsfelder erschlossen, beispielsweise in der Wasserreinigung.

Durch das erfindungsgemäße Herstellungsverfahren können weiterhin geometrische Optimierungen erreicht werden, welche über den Stand der Technik hinausgehen.

In einer möglichen Ausführungsform der vorliegenden Erfindung weist mindestens eine und weisen bevorzugt beide Seitenflächen des Grundkörpers und/oder der Filtrationsscheibe Erhebungen und/oder Vertiefungen auf. Bevorzugt werden diese Erhebungen und/oder Vertiefungen durch eine entsprechende Geometrie der Guss- bzw. der Pressform erzeugt. Durch die separate Herstellung des Grundkörpers bestehen dabei erfindungsgemäß beinahe beliebige Möglichkeiten der Gestaltung der Seitenflächen des Grundkörpers.

Insbesondere ist es dabei möglich, dass die Filtrationsscheibe eine sich über ihre Erstreckung unterschiedliche Dicke aufweist, bspw. eine in radialer Richtung variierende Dicke.

In einer möglichen Ausführungsform kann mindestens eine und können bevorzugt beide Seitenflächen des Grundkörpers Rillen aufweisen. Insbesondere können dabei mehrere konzentrische Rillen vorgesehen sein.

In einer bevorzugten Ausführungsform der vorliegenden Erfindung weisen die Erhebungen und Vertiefungen einen Höhenunterschied zwischen 0,5 mm und 5 mm, bevorzugt zwischen 1 mm und 3 mm auf. Insbesondere beträgt die Höhe der Rillen 0,5 mm bis 5 mm, weiter bevorzugt 1 mm bis 3 mm.

Bevorzugt ergibt sich durch die Verwendung einer mit Erhebungen und/oder Vertiefungen versehenen Seitenfläche des Grundkörpers eine Vergrößerung der Oberfläche um mehr als 10% gegenüber einer planen Seitenfläche, weiterhin bevorzugt eine Vergrößerung der Oberfläche um mehr als 30%, weiterhin bevorzugt um mehr als 50%. Da die Oberfläche der Membran die Filtrationsleistung definiert, entsteht so eine signifikante Leistungssteigerung.

In einer weiteren Ausführungsform der vorliegenden Erfindung kann der Grundkörper und/oder die Filtrationsscheibe ein oder mehrere in axialer Richtung verlaufende Löcher aufweisen. Bevorzugt handelt es sich dabei um durch die Filtrationsscheibe hindurchgehende Löcher. Auch hierdurch kann die Oberfläche der keramischen Filtrationsscheibe erhöht werden. Bevorzugt werden die Löcher durch eine entsprechende Geometrie der Guss- und/oder Pressform erzeugt.

Die Löcher weisen in einer möglichen Ausführungsform einen Durchmesser zwischen 2 mm und 20 mm, bevorzugt zwischen 4 mm und 15 mm, weiter bevorzugt zwischen 4 mm und 6 mm auf. Insbesondere sollen die Löcher so geschaffen sein, dass eine Beschichtung mit dem die Membran bildenden Schlicker noch möglich ist. Insbesondere ist die Membran bevorzugt auch in den Löchern vorgesehen, und erhöht hierdurch die Filtrationsfläche.

Neben der erhöhten Filterfläche entsteht durch die kreisende Bewegung der Lochscheiben in der Anlage eine weitere Verwirbelung, welche einem Verblocken der Membran entgegenwirkt.

Bevorzugt ergibt sich durch die Löcher eine Erhöhung der Membranfläche um mindestens 10% gegenüber einer Filtrationsscheibe ohne Löcher, weiterhin bevorzugt um mehr als 20%. Alternativ oder zusätzlich kann das Gewicht der Filtrationsscheibe durch die Löcher um mehr als 10%, weiterhin bevorzugt mehr als 20% gegenüber einer Scheibe ohne Löcher reduziert werden. Dies führt zu Materialeinsparungen, sowie zu Vorteilen beim Betrieb der mit einer solchen Filtrationsscheibe ausgestatteten Filtrationsanlage. Insbesondere können hier Kosteneinsparungen in der mechanischen Konstruktion der Filtrationsanlage und bei der Motorleistung erreicht werden.

Die Löcher und die Erhebungen und/oder Vertiefungen der Oberfläche, welche oben beschrieben wurden, können ggf. auch in Kombination zum Einsatz kommen.

Neben den erweiterten Möglichkeiten bei der Gestaltung der Oberfläche des Grundkörpers bzw. der Filtrationsscheibe ergeben sich durch das erfindungsgemä-βe Verfahren auch vereinfachte und erweiterte Möglichkeiten zur Herstellung von Strukturen im Inneren des Grundkörpers.

In einer möglichen Ausführungsform kann der Grundkörper innere Kanäle aufweisen, welche in die Axialbohrung münden. Solche inneren Kanäle erleichtern den Permeat-Abfluss. Die inneren Kanäle werden bevorzugt dadurch erzeugt, dass bei der Formung des Grundkörpers eine aus einem organischen Material bestehende Struktur in den Grünkörper des Grundkörpers eingebracht wird, welche dann beim Sintern des Grünkörpers des Grundkörpers ausgebrannt wird. Bevorzugt handelt es sich bei der aus einem organischen Material bestehenden Struktur dabei um eine Gitterstruktur. Insbesondere handelt es sich um eine zusammenhängende Gitterstruktur. In einer möglichen Ausführungsform der vorliegenden Erfindung kann es sich bei der aus einem organischen Material bestehenden Struktur um eine Kunststoffstruktur handeln.

Durch das Einbringen der aus einem organischen Material bestehenden Struktur in den Grünkörper des Grundkörpers ergibt sich eine besonders einfache Möglichkeit, innere Kanäle mit einer weitgehend beliebigen Form zur Verfügung zu stellen. Solche inneren Kanäle sind insbesondere dann von Vorteil, wenn eine hohe Durchflussleistung gewünscht ist.

In einer weiteren Ausführungsform der vorliegenden Erfindung kann der Grundkörper eine Verstärkungsstruktur aufweisen, welche bei der Formung des Grünkörpers des Grundkörpers in diesen eingebracht wird. Insbesondere handelt es sich dabei um eine keramische Verstärkungsstruktur, welche sich beim Sintern daher nicht mehr ändert. Insbesondere kann die Verstärkungsstruktur dabei aus keramischen Fasern bestehen. Eine solche Verstärkungsstruktur erlaubt die Herstellung eines besonders stabilen Grundkörpers. Durch die Struktur wird das Filtrationselement mechanisch verstärkt und wird so stabiler gegenüber mechanischen Belastungen. Besonders bevorzugt wird eine solche mechanische Verstärkung bei der Herstellung des Grundkörpers aus Schaumkeramik eingesetzt. Die mechanische Verstärkung vermeidet insbesondere einen kompletten Bruch der Filtrationsscheibe.

Die Struktur, welche zur Herstellung der inneren Kanäle bzw. als Verstärkungsstruktur dient, kann insbesondere wie folgt in den Grünkörper des Grundkörpers eingebracht werden:
Insbesondere kann die Struktur in die Guss- oder Pressform eingelegt werden, und mit keramischem Material umgeben werden.

Bevorzugt wird die Struktur beim Gießverfahren in die leere Gussform eingelegt und umgossen.

Beim Trockenpressverfahren wird die Struktur bevorzugt in die Pressform eingelegt, nachdem eine erste Lage keramisches Material in die Pressform eingebracht wurde, und weiter bevorzugt durch eine zweite Lage keramisches Material bedeckt, woraufhin der Grundkörper fertig gepresst wird. Alternativ könnte die Struktur beim Trockenpressverfahren zwischen zwei vorgepressten Lagen keramischen Materials angeordnet und dann in die Pressform eingelegt werden, wo der Grundkörper fertig gepresst wird.

Das erfindungsgemäße Herstellungsverfahren erlaubt damit eine kostengünstige Herstellung einer keramischen Filtrationsscheibe, und bietet zudem erweitere Möglichkeiten bei der Gestaltung der Geometrie und/oder bei der mechanischen Auslegung der Filtrationsscheibe.

In einem zweiten, unabhängigen Aspekt umfasst die vorliegende Erfindung ein Verfahren zur Herstellung einer keramischen Filtrationsscheibe, welche einen porösen keramischen Grundkörper und eine auf den Außenseiten des Grundkörpers angeordnete keramische Membran aufweist, wobei die keramische Filtrationsscheibe eine Axialbohrung aufweist, welche den Permeat-Abfluss der Filtrationsscheibe bildet. Gemäß dem zweiten Aspekt wird die Filtrationsscheibe im Bereich ihrer Axialbohrung mit einem Anschlussstück aus Kunststoff versehen, mit welchem die Filtrationsscheibe auf eine Welle aufschiebbar ist. Durch das Anschlussstück kann auf eine Präzisionsbearbeitung der Innenbohrung verzichtet werden. Weiterhin kann die Filtrationsscheibe einfach auf die Welle aufgeschoben werden.

Bevorzugt wird das Anschlussstück im Spritzgussverfahren hergestellt. Das Anschlussstück kann mit der Filtrationsscheibe verklemmt und/oder verklebt werden.

Mehrere solcher Filtrationsscheiben können unter Zwischenschaltung von Distanzstücken auf eine Welle aufgeschoben werden. Eine feste Verschraubung ist dann nur noch an den Enden der Welle erforderlich. Auf diese Weise kann eine sehr schnelle und einfache Montage und Demontage der Filtrationsscheiben erfolgen.

Der zweite Aspekt der vorliegenden Erfindung kann dabei auch unabhängig von dem ersten Aspekt der vorliegenden Erfindung zum Einsatz kommen. Bevorzugt erfolgt die Herstellung der Filtrationsscheibe, welche gemäß dem zweiten Aspekt mit einem Anschlussstück ausgestattet wird, jedoch so, wie dies oben im Hinblick auf den ersten Aspekt beschrieben wurde.

Die vorliegende Erfindung umfasst neben und unabhängog von den erfindungsgemäßen Herstellungsverfahren weiterhin neue, vorteilhafte Ausgestaltungen der Filtrationsscheibe.

In einem ersten Aspekt umfasst die vorliegende Erfindung eine Filtrationsscheibe mit einem porösen keramischen Grundkörper und einer auf den Außenseiten des Grundkörpers angeordneten keramischen Membran und einer Axialbohrung, welche den Permeat-Abfluss der Filtrationsscheibe bildet.

In einer ersten Variante weist die Filtrationsscheibe dabei eine Verstärkungsstruktur aus keramischen Fasern auf.

In einer zweiten Variante weist der Grundkörper und/oder die Filtrationsscheibe eine oder mehrere in axialer Richtung verlaufende, bevorzugt durchgehende Löcher auf. Bevorzugt weisen diese die gleiche Dimensionierung auf, welche oben im Hinblick auf das Herstellungsverfahren näher angegeben wurde.

In einer dritten Variante weist mindestens eine und bevorzugt beide Seitenflächen des Grundkörpers und/oder der Filtrationsscheibe Erhebungen und/oder Vertiefungen auf, durch welche sich eine über die Erstreckung der Filtrationsscheibe unterschiedliche Dicke der Filtrationsscheibe ergibt. Bevorzugt weisen diese die gleiche Form und/oder Dimensionierung auf, welche oben im Hinblick auf das Herstellungsverfahren näher angegeben wurde.

Die einzelnen Varianten des ersten Aspektes können dabei jeweils für sich genommen, aber auch in beliebiger Kombination zum Einsatz kommen.

Die Filtrationsscheibe gemäß dem ersten Aspekt ist auch unabhängig von dem erfindungsgemäßen Herstellungsverfahren Gegenstand der vorliegenden Erfindung. Bevorzugt wird die erfindungsgemäße Filtrationsscheibe jedoch so hergestellt, wie dies oben im Hinblick auf den ersten Aspekt der vorliegenden Erfindung näher dargestellt wurde.

In einem zweiten Aspekt umfasst die vorliegende Erfindung eine Filtrationsscheibe mit einem porösen keramischen Grundkörper und einer auf den Außenseiten des Grundkörpers angeordneten keramischen Membran und einer Axialbohrung, welche den Permeat-Abfluss der Filtrationsscheibe bildet. Erfindungsgemäß weist die Filtrationsscheibe dabei im Bereich der Axialbohrung ein Anschlussstück aus Kunststoff auf. Bevorzugt ist die Filtrationsscheibe über das Anschlussstück auf einer Welle aufschiebbar. Bevorzugt ist das Anschlussstück ein Spritzgussteil und/oder mit der Filtrationsscheibe verklemmt und/oder verklebt. Insbesondere ist das Anschlussstück dabei so ausgestaltet, wie dies oben im Hinblick auf das erfindungsgemäße Verfahren dargestellt wurde.

Die Filtrationsscheibe mit dem Anschlussstück kann zudem die Merkmale einer Filtrationsscheibe gemäß einer oder mehrerer Varianten der oben näher beschriebenen Filtrationsscheibe gemäß dem ersten Aspekt verwirklichen.

In einem dritten Aspekt umfasst die vorliegende Erfindung eine Filtrationsscheibe mit einem porösem keramischen Grundkörper und eine auf den Außenseiten des Grundkörpers angeordneten keramischen Membran und einer Axialbohrung, welche den Permeatabfluss der Filtrationsscheibe bildet, welche durch eines der Verfahren hergestellt ist, welche oben beschrieben wurden. Insbesondere ist die Filtrationsscheibe dabei gemäß einem Verfahren gemäß den ersten und/oder dem zweiten Aspekt, wie sie oben beschrieben wurden, hergestellt.

In einem weiteren unabhängigen Aspekt umfasst die vorliegende Erfindung eine Filtrationsanlage mit einer drehbaren Welle, auf welcher eine oder mehrere Filtrationsscheiben, wie sie oben näher dargestellt wurden, angeordnet sind. Bevorzugt sind die Filtrationsscheiben dabei in einem Druckbehälter angeordnet, in welchen die zu filternde Flüssigkeit einströmt und/oder aus welchem das Retentat abströmt. Alternativ oder zusätzlich kann das Permeat über die Axialbohrung der Filtrationsscheiben und die Welle abfließen.

In einer möglichen Ausführungsform der erfindungsgemäßen Filtrationsanlage sind mehrere Filtrationsscheiben über Anschlusstücke aus Kunststoff auf die Welle aufgeschoben. Bevorzugt sind zwischen den Filtrationsscheiben Distanzstücke vorgesehen. Diese Distanzstücke können jedoch auch Teil der Anschlusstücke sein. Bevorzugt ist der Stapel aus Filtrationsscheiben und/oder Distanzstücken auf der Welle verspannt. Insbesondere erfolgt das Verspannen der Filtrationsscheiben und/oder Distanzstücke auf der Welle über eine Verschraubung.

Eine erfindungsgemäße Filtrationsscheibe gemäß einem der oben näher beschriebenen Aspekte weist bevorzugt eines oder mehrere der folgenden Merkmale auf:
Die erfindungsgemäße Filtrationsscheibe ist bevorzugt rund. Bei der Axialbohrung handelt es sich bevorzugt um eine Mittenbohrung.

Die Axialbohrung kann in einer möglichen Ausführungsform bereits durch eine entsprechende Ausgestaltung der Press- bzw. Gussform erstellt werden. In einer alternativen Ausführungsform kann die Axialbohrung durch eine materialabtragende Bearbeitung des Grünkörpers des Grundkörpers und/oder des gesinterten Grundköpers und/oder der Filtrationsscheibe zur Verfügung erzeugt werden.

Die Membran bedeckt bevorzugt zumindest die beiden Seitenflächen des Grundkörpers und bevorzugt den gesamten Grundkörper bis auf den Bereich der Axialbohrung. Im Bereich der Axialbohrung ist bevorzugt zumindest in Teilbereichen keine Membran vorgesehen, sodass das Permeat aus dem Inneren des Grundkörpers abfließen kann. Besonders bevorzugt ist im Bereich der Axialbohrung überhaupt keine Membran aufgebracht.

Bei der Filtrationsscheibe handelt es sich bevorzugt um eine flache Scheibe. Flach bedeutet in diesem Fall, dass der maximale Durchmesser der Scheibe mindestens 5 mal so groß ist wie die maximale Dicke, vorteilhafterweise mindestens 10 mal so groß, weiterhin vorteilhafterweise mindestens 20 mal so groß.

Der Radius der Filtrationsscheibe beträgt bevorzugt zwischen 5 cm und 60 cm, weiter bevorzugt zwischen 10 cm und 30 cm.

Die maximale Dicke der keramischen Filtrationsscheibe in axialer Richtung beträgt bevorzugt zwischen 3 mm und 20 mm, weiter bevorzugt zwischen 5 mm und 10 mm.

Die minimale Dicke der Filtrationsscheibe in axialer Richtung beträgt bevorzugt zwischen 2 mm und 20 mm, weiterhin bevorzugt zwischen 4 mm und 10 mm.

Die Filtrationsscheibe kann dabei insbesondere die Form einer runden, sich in einer Ebene erstreckenden dünnen Scheibe aufweisen.

Die Filterfläche der keramischen Filtrationsscheibe beträgt bevorzugt zwischen 0,05 m² und 2 m², weiter bevorzugt zwischen 0,01 m² und 0,05 m².

Die Porengröße der Membran ist bevorzugt geringer als die Porengröße des Grundkörpers. Bevorzugt weist der Grundkörper dabei einen Porendurchmesser zwischen 1 µm und 100 µm, weiter bevorzugt zwischen 1 µm und 10 µm auf. Der Porendurchmesser der obersten Schicht der Membran, welcher die Filtrationseigenschaften der Membran definiert, kann je nach Einsatzgebiet zwischen 0,001 µm und 1 µm liegen. Insbesondere wenn der Porendurchmesser der äußersten Schicht der Membran weniger als 0,1 µm beträgt, weist die Membran bevorzugt mehrere Schichten mit jeweils nach außen hin kleiner werdendem Porendurchmesser auf. Die inneren Schichten der Membran dienen dabei als Stützschicht für die äußerste Membranschicht.

Der Grundkörper kann beispielsweise auf Basis von Al₂O₃, TiO₂ und/oder ZrO₂ hergestellt werden.

Die keramische Membran kann aus einer oder mehreren Schichten bestehen, welche auf Basis von Al₂O₃, TiO₂ und/oder ZrO₂ hergestellt werden.

Die Membran weist bevorzugt eine Porosität zwischen 20% und 70% auf, weiter bevorzugt zwischen 30% und 60%.

Die vorliegende Erfindung wird nun anhand von Ausführungsbeispielen sowie Zeichnungen näher beschrieben.

Dabei zeigen:
- Fig. 1:: Ein erstes Ausführungsbeispiel einer durch ein erfindungsgemäßes Verfahren hergestellten Filtrationsscheibe,
- Fig. 2:: ein zweites Ausführungsbeispiel, bei welchem die Seitenflächen der Filtrationsscheibe eine Rillenoberfläche aufweisen,
- Fig. 3:: ein drittes Ausführungsbeispiel, bei welchem die Filtrationsscheibe durch axiale Löcher durchsetzt ist,
- Fig. 4:: links eine erfindungsgemäße Filtrationsscheibe mit inneren Kanälen und rechts die hierfür eingesetzte, bei Sintern ausgebrannte Struktur aus einem organischen Material,
- Fig. 5:: links eine erfindungsgemäße Filtrationsscheibe mit einer Verstärkungstruktur und rechts die Verstärkungsstruktur aus keramischen Fasern und
- Fig. 6:: ein Ausführungsbeispiel einer erfindungsgemäßen Filtrationsanlage mit mehreren Ausführungsbeispielen einer Filtrationsscheibe mit Anschlusstücken aus Kunststoff.

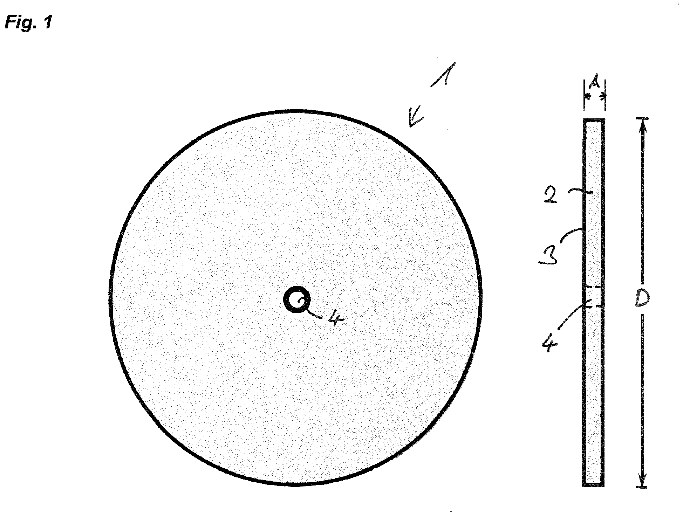

Fig. 1 zeigt ein Ausführungsbeispiel einer erfindungsgemäßen keramischen Filtrationsscheibe 1. Die Filtrationsscheibe weist einen poriosen keramischen Grundkörper 2 und eine auf den Außenseiten des Grundkörpers angeordnete keramische Membran 3 auf.

Die Membranschicht 3 definiert durch ihre Porengröße die Größe der Partikel, welche durch die Filtrationsscheibe ausgefiltert werden. Der Grundkörper dient als Support für die Membranschicht und zur Abführung der Permeats. Dabei wird die zu reinigende Flüssigkeit durch die mit der Membran 3 beschichtete Außenhaut des porösen keramischen Grundkörpers 2 gepumpt. Das Permeat durchdringt die Membran von außen nach innen. Das Retentat verbleibt außerhalb der Membran.

Durch die Porosität des Grundkörpers und gegebenenfalls innere Kanäle fließt das Permeat zu der Axialbohrung 4, welche den Permeatabfluss der Filtrationsscheibe bildet.

Die Filtrationsscheibe 1 ist als eine flache Scheibe mit einer runden Grundfläche ausgestaltet. Die Axialbohrung 4 bildet eine Mittenbohrung der Filtrationsscheibe. Die Filtrationsscheibe kann mit ihrer Axialbohrung 4 auf einer Welle angeordnet werden, welche die Filtrationsscheibe zum einen in Drehung versetzt und zum anderen das Permeat durch das Innere der Welle ableitet.

Die Membran 3 umgibt den Grundkörper 2 bevorzugt zumindest auf seinen Seitenflächen. Bevorzugt ist die Membran auch im Bereich der Außenkante der Filtrationsscheibe vorgesehen. Im Bereich der Axialbohrung 4 ist dagegen bevorzugt keine Membran vorgesehen, so dass das Permeat hier einfacher abfließen kann.

Im Ausführungsbeispiel weist die Filtrationsscheibe eine Dicke A von 7mm auf, und einen Durchmesser D von 400mm. Hierdurch ergibt sich eine Filterfläche von ca. 0,25m².

Die Filtrationsscheibe besteht damit aus einem Grundkörper 2 aus poröser Keramik, auf welchen erfindungsgemäß eine als Membran 3 dienende mikro- oder nanoporöse keramische Schicht aufgebracht wird. Erfindungsgemäß wird hierfür in einem ersten Schritt der Grundkörper geformt und gesintert, während die Membran in einem zweiten Schritt in einer oder mehreren Schichten auf den bereits gesinterten Grundkörper aufgebracht und zusammen mit dem Grundköper nochmals gesintert wird. Insbesondere kann das Aufbringen der die Membran bildenden Schicht bzw. Schichten durch ein Tauchverfahren erfolgen, bei welchem der Grundkörper in einen Schlicker eingetaucht wird, welcher die die Membran bildende mikro- oder nanoporöse Schicht bildet.

Erfindungsgemäß ergeben sich hierdurch neue Möglichkeiten, den Grundkörper herzustellen. Weiterhin sind neue Geometrien für den Grundkörper bzw. die Filtrationsscheibe möglich. Hierdurch kann die erfindungsgemäße Filtrationsscheibe auf wesentlich kostengünstigere Weise hergestellt werden, so dass sich weitere Anwendungsfelder in der keramischen Filtration insbesondere in der Wasserreinigung ergeben.

Für die Herstellung des Grundkörpers 2 kann insbesondere eine der folgenden beiden Methoden eingesetzt werden:
In einer ersten Methode kann der Grundkörper als eine poröse Schaumstruktur aus einem keramischen Rohstoff und einem Porosierungsmittel im Gießverfahren hergestellt werden. Insbesondere wird hierfür ein keramischer Schlicker mit einem als Porosierungsmittel dienenden Metallpulver oder einer Metallpaste gemischt und in eine poröse Gussform eingebracht. Durch eine Reaktion mit dem Metallpulver bzw. der Metallpaste entsteht so ein keramischer Schaum, welcher die Gießform ausfüllt.

Ein solches Gießverfahren hat den besonderen Vorteil, dass der sich ergebende Grundkörper eine relativ glatte Oberfläche aufweist, und in seinen Inneren eine gröbere Porenstruktur. Hierdurch kann die Membran problemlos aufgebracht werden. Insbesondere weist ein so hergestellter Grundkörper auf seiner Oberfläche einen kleineren Porendurchmesser auf als in seinem Inneren.

Die Herstellung erfolgt dabei bevorzugt so, wie dies aus der DE 10 2008 015271 A1 bekannt ist.

In einer alternativen Ausführungsform kann der Grundkörper 2 in einem Trockenpressverfahren hergestellt werden. Hierbei wird das Keramikmaterial in einer uniaxialen Presse durch Druck verdichtet. Insbesondere wird ein keramisches Granulat möglichst gleichmäßig in eine Metallform gefüllt. Diese Form befindet sich in einen Pressautomat, der die Form von oben und unten mit hohem Druck zusammenpresst. Anschließend fährt die Presse in die Ausgangsstellung zurück, und im Werkzeug integrierte Auswerferstifte heben das gepresste Formteil aus dem Werkzeug. Als Granulat werden bevorzugt Hohlkugeln mit einem Durchmesser zwischen 0,5 mm und 2mm eingesetzt.

Die Herstellung des Granulates kann erfolgen, indem zunächst ein keramisches Pulver mit organischen Additiven vermischt und in einem Sprühtrocknungsverfahren zu dem Granulat verarbeitet wird. Hierfür wird das mit organischen Additiven vermischte keramische Pulver mit Wasser verflüssigt und über eine Düse in einen Edelstahlturm mit einer Temperatur zwischen 100 und 200°C gesprüht. In der hei-βen Luft verdampft das Wasser und es bildet sich das Granulat in Form von Hohlkugeln. Auf diese Weise entsteht ein rieselfähiges und verdichtungsfähiges Material.

Das Trockenpressverfahren kann sehr schnell ablaufen und ist gut automatisierbar. Es eignet sich daher gut für die Massenfertigung.

Durch das erfindungsgemäße Verfahren können weiterhin geometrische Optimierungen der Filtrationsscheibe erreicht werden, welche im Folgenden anhand von möglichen Ausführungsbeispielen näher beschrieben werden.

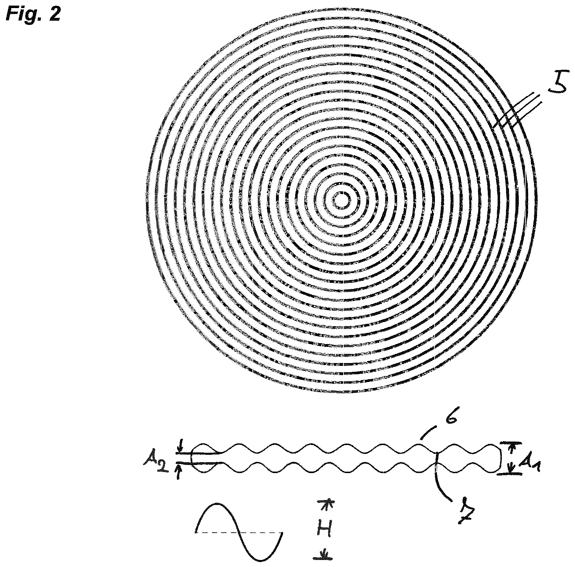

Fig. 2 zeigt ein Beispiel für eine erste solche geometrische Optimierung. Dabei weisen die beiden Seitenflächen des Grundkörpers und damit der Filtrationsscheibe anstatt einer glatten Oberfläche eine aus konzentrischen Kreisen 5 gebildete Rillenform auf. Bevorzugt beträgt die Höhe H der Rillen dabei zwischen 1 und 3mm. Hierdurch kann im Ausführungsbeispiel gegenüber der glatten Oberfläche bei gleichen Außenabmessungen die Oberfläche der Filtrationsscheibe um 50% gesteigert werden. Da die Oberfläche der Membran die Filtrationsleistung definiert, entsteht so eine signifikante Leistungssteigerung. Anstellte der Rillen in Form von konzentrischen Kreisen können selbstverständlich auch andere Erhebungen und Vertiefungen der Oberfläche eingesetzt werden.

Durch die Herstellung im Gussverfahren und/oder Trockenpressverfahren ist durch eine entsprechende Formgebung der Gussform bzw. der Pressform die Erzeugung beinahe beliebiger Oberflächengeometrien der Filtrationsscheibe möglich. Insbesondere sind dabei auch Oberflächengeometrien mit Erhebungen und Vertiefungen der Seitenflächen der Filtrationsscheibe möglich, insbesondere solche, durch welche sich die Dicke A der Filtrationsscheibe über ihre Erstreckung ändert.

Bevorzugt sinkt die minimale Dicke der Filtrationsscheibe dabei nicht unter 3mm, um die mechanische Stabilität nicht zu gefährden. Bevorzugt beträgt die maximale Dicke der Filtrationsscheibe nicht mehr als 10mm, um die kompakten Abmessungen beizubehalten. Im Ausführungsbeispiel in Fig. 2 schwankt dabei durch die Rillenform die Dicke zwischen einer maximalen Dicke A1 und einer minimalen Dicke A2.

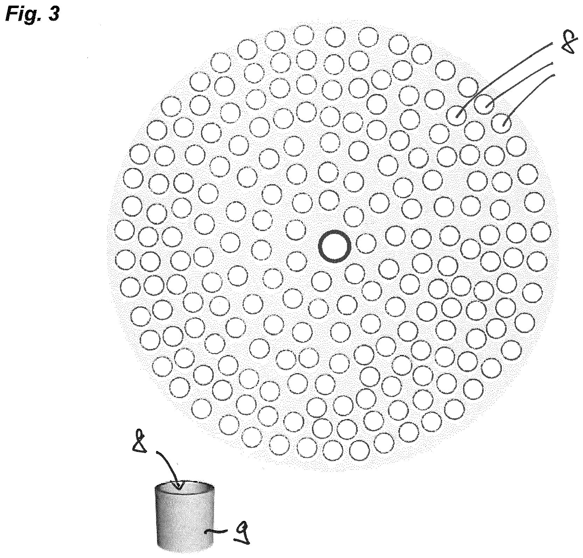

In Fig. 3 ist eine weitere, alternative oder zusätzliche geometrische Optimierung der Filtrationsscheibe gezeigt. Dabei werden in die Fitrationsscheibe Löcher 8 eingebracht. Im Ausführungsbeispiel gehen diese Löcher 8 durch die Filtrationsscheibe hindurch. Die Löcher können beispielsweise zwischen 10 und 40% der Grundfläche der Filtrationsscheibe ausmachen, bevorzugt zwischen 20 und 30%.

Auch so kann die für die Filtration relevante Oberfläche gesteigert werden, beispielsweise um weitere 25 bis 35%. Die Löcher müssen so geschaffen sein, dass eine Beschichtung mit dem mikro- oder nanoporösen Schlicker noch möglich ist. Dabei ist in der Fig. 3 unten ein solches Loch 8 mit der das Loch auskleidenden Membran 9 dargestellt. Insbesondere weisen die Löcher 8 einen Durchmesser zwischen 4 und 6mm auf.

Auch die Löcher können durch eine entsprechende Formgebung der Guss- bzw. Pressform erreicht werden.

Neben der höhen Oberfläche entsteht durch die kreisende Bewegung der Lochscheiben in der Anlage eine weitere Verwirbelung, die einem Verblocken der Membran entgegenwirkt. Zusätzlich wird das Gewicht der Scheibe reduziert, beispielsweise um ca. 20 bis 30%. Dies führt zu Materialeinsparung. Weiterhin führt dies zu Kosteneinsparungen bei der mechanischen Konstruktion der Filtrationsanlage und der notwendigen Motorleistung. Ein weiterer Vorteil besteht beim Pressverfahren darin, dass durch die Löcher ein geringerer Pressdruck ausreicht.

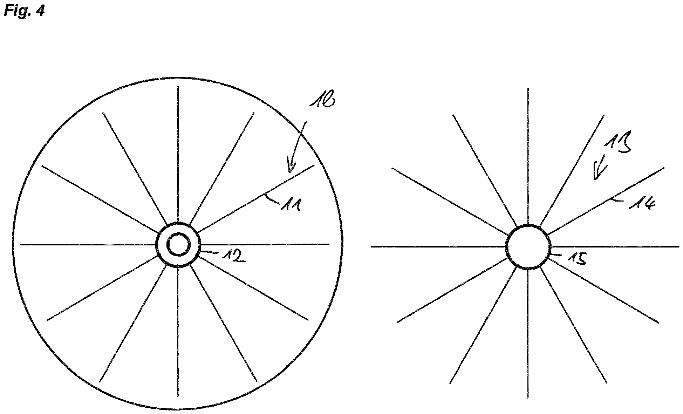

In Fig. 4 ist ein weiteres Ausführungsbeispiel einer erfindungsgemäßen Filtrationsscheibe gezeigt, bei welcher im Inneren des Grundkörpers 2 Kanäle 10 vorgesehen sind, welche der Abführung des Permeats in Richtung auf die Axialbohrung dienen. Im Ausführungsbeispiel sind dabei in radialer Richtung verlaufende Kanäle 11 vorgesehen, welche in einen Ringkanal 12 im Bereich der Axialbohrung münden.

Die Herstellung dieser inneren Kanäle kann durch das Einbringen der in Fig. 4 rechts dargestellten Kunststoffstruktur 13 in den Grünkörper des Grundkörpers erfolgen. Bei dem Sinterprozess der Keramik bei bspw. 1.500°C wird der Kunststoff herausgebrannt, so dass die inneren Kanäle übrig bleiben. Auf diese Weise wird die Permeatableitung erheblich verbessert. Zugleich wird Keramikmaterial eingespart, was wiederrum zu einer Kosten- und Gewichtsreduktion führt.

Die Kunststoffstruktur weist bevorzugt eine Gitterstruktur auf, welche der Form der inneren Kanäle entspricht. Im Ausführungsbeispiel sind strahlenförmige Arme 14 vorgesehen, welche durch eine Ringstruktur 15 miteinander verbunden sind.

Die Kunststoffstruktur 13 kann bei Herstellung im Trockenpressverfahren in die Pressform, bei einem Gießverfahren in die Gießform eingelegt und mit keramischem Material umgeben werden. Bei der Herstellung im Trockenpressverfahren wird bevorzugt zunächst eine erste Schicht Granulat in die Pressform eingebracht, angepresst, dann die Kunststoffstruktur eingebracht, mit einer zweiten Schicht von Granulat bedeckt, und nochmals fertig gepresst. Bei der Herstellung im Gießverfahren kann die Kunststoffstruktur dagegen in die noch leere Gießform eingebracht werden.

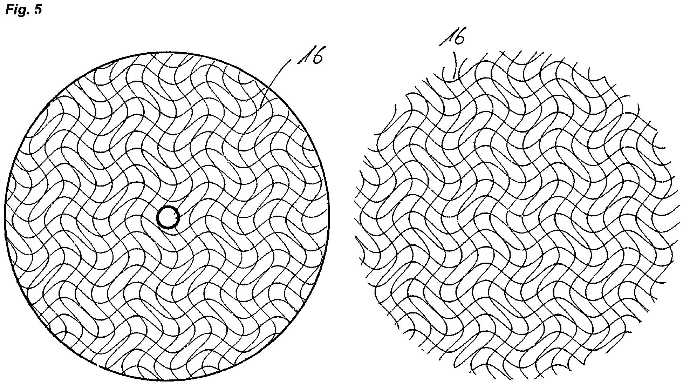

Fig. 5 zeigt eine weitere Variante, bei welchem der Grundkörper durch das Einlegen von keramischem Fasermaterial 16 mechanisch verstärkt wird. Im Sinterprozess bei bspw. 1.500°C werden die eingebrachten Faserstrukturen nicht mehr verändert. Durch die Faserstrukturen wird das Filtrationselement mechanisch verstärkt und hierdurch stabiler gegenüber mechanischen Belastungen. Dies ist vor allem bei der Schaumkeramik von Bedeutung. Vor allem wird durch diese Verstärkung ein kompletter Bruch des Filtrationselementes vermieden. Bei der Struktur aus keramischen Fasermaterial kann es sich um eine Matte aus keramischem Fasermaterial handeln, insbesondere um ein Gewebe oder um ein Flies aus keramischen Fasern.

Die Struktur aus bereits fertig gesintertem keramischem Fasermaterial kann dabei wiederrum sowohl in die Trockenpressform, als auch in die Gießform für den Keramikschaum eingelegt werden. Dies kann in gleicher Weise erfolgen, wie dies oben für die Kunststoffstruktur beschrieben wurde.

Erfindungsgemäß kann zum einen die eigentliche Membranschicht, durch welche die Separation der Partikel erfolgt, den spezifischen Filtrationsanforderungen angepasst werden. Insbesondere wird hierfür die Größe der keramischen Partikel des Schlickers, durch welchen die Membran hergestellt wird, und damit die Porengröße der Membran entsprechend der gewünschten Filtrationsgröße eingestellt. Insbesondere bei einer Mikro- oder Nanofiltration wird die Membran bevorzugt aus mehreren Schichten mit nach außen hin kleiner werdenden Partikel- bzw. Porendurchmessern hergestellt.

Erfindungsgemäß kann jedoch auch der Grundkörper an die spezifischen Filtrationsanforderungen angepasst werden:
In der Mikrofiltration werden große Mengen von Flüssigkeit mit relativ geringem Druck, beispielsweise im Bereich zwischen 3 und 5 Bar, verarbeitet. Hier kann der Grundkörper daher mit einer hohen Porosität und/oder inneren Kanälen ausgestaltet werden. Die hierdurch entstehende filigrane Struktur hält dem geringen Druck dennoch noch stand, und leitet das Permeat besonders gut ab.

In der Nanofiltration werden dagegen geringe Mengen Flüssigkeit mit hohem Druck von beispielsweise bis zu 40 Bar verarbeitet. Hier kann der Grundkörper mit einer geringen Porosität und/oder ohne innere Kanäle und/oder mit verstärkenden Fasern ausgestaltet werden. Hierdurch ergibt sich eine stabile Struktur, welche dem hohen Druck standhält, und welche für die Abführung der geringen Mengen an Permeat dennoch ausreicht.

Erfindungsgemäß können je nach den Anforderungen an die Filtrationsscheibe eine oder mehrere der oben näher beschriebenen Ausgestaltungen der Oberfläche bzw. der inneren Struktur des Grundkörpers miteinander kombiniert werden.

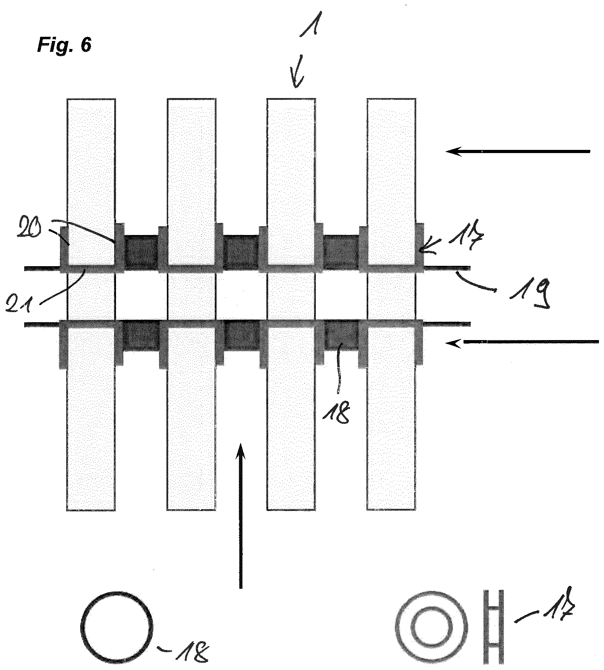

Eine Filtrationsanlage gemäß der vorliegenden Erfindung ist in Fig. 6 gezeigt. Die Filtrationsanlage weist eine Welle 19 auf, auf welcher mehrere erfindungsgemäße Filtrationsscheiben 1 mit ihren jeweiligen Axialbohrungen angeordnet sind. Die Welle versetzt zum einen die Filtrationsscheiben in Drehung, und leitet zum anderen das Permeat durch ihr Inneres ab. Hierfür weist die Welle im Bereich der jeweiligen Axialbohrung ein oder mehrere Öffnungen auf, über welche das Permeat von der keramischen Filtrationsscheibe ins Innere der Welle fließen kann.

Fig. 6 zeigt zudem einen zweiten Aspekt der vorliegenden Erfindung, welcher mit dem oben beschriebenen erfindungsgemäßen Herstellungsverfahren kombiniert werden kann. Dabei ist auf der Axialbohrung der Filtrationsscheibe ein Anschlussteil 17 aus Kunststoff aufgeklemmt und/oder aufgeklebt, über welches die Filtrationsscheibe auf die Welle 19 aufgeschoben werden kann.

Das Anschlussstück 17 weist bevorzugt zwei ringförmige Elemente 20 auf, welche mit den Seitenflächen der keramischen Filtrationsscheibe um die Axialbohrung herum in Kontakt stehen. Bevorzugt ist im Bereich der ringförmigen Elemente 20 ein Dicht- und/oder Klebebereich vorgesehen. Weiterhin weist das Anschlussstück 17 eine Öffnung 21 auf, mit welcher es auf die Welle 19 geschoben werden kann. Im Bereich der Öffnung 21 sind in radialer Richtung bevorzugt eine oder mehrere Durchbrüche vorgesehen, welche ein Abfließen des Permeats zur Welle 19 hin ermöglichen. In Fig. 6 ist das Anschlussstück 17 rechts unten noch einmal in einer Seitenansicht sowie in einer axialen Ansicht gezeigt.

Die Anschlusstücke 17 können einteilig oder mehrteilig sein. Insbesondere kann ein Anschlussstück einstückig als Kunststoffspritzgussteil gefertigt sein. Alternativ kann ein Anschlussstück aus mehreren separaten Teilen, insbesondere Spritzgussteilen bestehen. Beispielsweise ist es denkbar, dass ein Anschlussstück aus zwei separaten Elementen besteht, welche jeweils von einer Seite auf die Axialbohrung aufgeschoben werden.

Die Filtrationsscheiben können über die Anschlusstücke 17 aus Kunststoff auf die Welle 19 aufgeschoben werden. Im Ausführungsbeispiel in Fig. 6 sind dabei Distanzstücke 18 zwischen den einzelnen Filtrationsscheiben vorgesehen, welche sicherstellen, dass der Abstand zwischen den Filtrationsscheiben erhalten bleibt. Bei den Distanzstücken 18 kann es sich insbesondere um ringförmige Elemente handeln, welche auf die Welle 19 aufgeschoben werden und sich beidseitig auf den ringförmigen Elementen 20 der Anschlusstücke abstützen.

Eine feste Verschraubung der einzelnen Filtrationsscheiben mit der Welle 19 ist nicht mehr notwendig. Vielmehr können die Filtrationsscheiben zusammen mit den Distanzstücken 18 auf die Welle aufgeschoben und auf der Welle verspannt werden. Dies kann beispielsweise über eine Verschraubung an den Enden der Welle erfolgen. Die Distanzstücke 18 sind in dem in Fig. 6 dargestellten Ausführungsbeispiel als separate Elemente ausgeführt. Hierdurch kann der Abstand zwischen den einzelnen Filtrationsscheiben durch Auswahl entsprechender Distanzstücke frei eingestellt werden. In einer alternativen Ausführungsform könnten die Distanzstücke jedoch auch einen Teil der Anschlussstücke bilden.

Durch die Verwendung der Anschlusstücke 17 kann auf eine Präzisionsbearbeitung der Axialbohrung verzichtet werden. Weiterhin ist eine sehr schnelle und einfache

Montage und Demontage der Filtrationsscheiben möglich. Insbesondere können defekte Filtrationsscheiben sehr schnell ausgetauscht werden.

Die vorliegende Erfindung erlaubt es, eine keramische Filtrationsscheibe zur Verfügung zu stellen, welche durch die geometrischen Vorteile und das effiziente Fertigungsverfahren erhebliche Kosteneinsparungen gegenüber bekannten Lösungen bietet. Auch kann aufgrund des geringen Gewichts im Verhältnis zur Filterleistung eine deutliche Einsparung in der Anlagentechnik erzielt werden.

## Patentansprüche

1. Verfahren zur Herstellung einer keramischen Filtrationsscheibe, welche einen porösen keramischen Grundkörper und eine auf den Außenseiten des Grundkörpers angeordnete keramische Membran aufweist, wobei die keramische Filtrationsscheibe eine Axialbohrung aufweist, welche den Permeat-Abfluss der Filtrationsscheibe bildet,
**dadurch gekennzeichnet,**
**dass** in einem ersten Schritt der Grundkörper geformt und gesintert wird, und dass in einem zweiten Schritt die Membran in einer oder mehreren Schichten als Schlicker auf den bereits gesinterten Grundkörper aufgebracht und zusammen mit dem Grundkörper nochmals gesintert wird.

2. Verfahren nach Anspruch 1, wobei der Grundkörper im Gießverfahren oder im Trockenpressverfahren hergestellt wird, wobei bevorzugt der Grundkörper im Gießverfahren aus Keramikschaum oder im Trockenpressverfahren aus einem keramischen Granulat hergestellt wird.

3. Verfahren nach Anspruch 1 oder 2, wobei die Membran im Tauchverfahren auf den Grundkörper aufgebracht wird.

4. Verfahren nach einem der vorangegangenen Ansprüche, wobei mindestens eine und bevorzugt beide Seitenflächen des Grundkörpers und/oder der Filtrationsscheibe Erhebungen und/oder Vertiefungen aufweisen, welche bevorzugt durch eine entsprechende Geometrie der Guß- oder Pressform erzeugt werden und/oder durch welche sich bevorzugt eine über die Erstreckung der Filtrationsscheibe unterschiedliche Dicke der Filtrationsscheibe ergibt, wobei bevorzugt mindestens eine und bevorzugt beide Seitenflächen des Grundkörpers Rillen aufweist und/oder wobei die Erhebungen und Vertiefungen einen Höhenunterschied zwischen 0,5 mm und 5 mm, bevorzugt zwischen 1 mm und 3 mm aufweisen.

5. Verfahren nach einem der vorangegangenen Ansprüche, wobei der Grundkörper und/oder die Filtrationsscheibe eine oder mehrere in axialer Richtung verlaufende, bevorzugt durchgehende Löcher aufweist, welche bevorzugt durch eine entsprechende Geometrie der Guß- oder Pressform erzeugt werden, wobei die Löcher bevorzugt einen Durchmesser zwischen 2 mm und 20 mm, bevorzugt zwischen 4 mm und 15 mm, weiter bevorzugt zwischen 4 mm und 6 mm aufweisen und/oder wobei die Membran bevorzugt auch in den Löchern vorgesehen ist.

6. Verfahren nach einem der vorangegangenen Ansprüche, wobei der Grundkörper innere Kanäle aufweist, welche in die Axialbohrung münden, und welche erzeugt werden, indem bei der Formung des Grundkörpers eine aus einem organischen Material bestehende Struktur in den Grundkörper eingebracht wird, welche beim Sintern des Grundkörpers ausgebrannt wird, wobei es sich bei der aus einem organischen Material bestehenden Struktur bevorzugt um eine Gitterstruktur und/oder eine Kunststoffstruktur handelt.

7. Verfahren nach einem der vorangegangenen Ansprüche, wobei der Grundkörper eine Verstärkungsstruktur aufweist, welche bei der Formung des Grundkörpers in diesen eingebracht wird, wobei es sich bevorzugt um eine keramische Verstärkungsstruktur handelt, insbesondere eine Verstärkungsstruktur aus keramischen Fasern.

8. Verfahren nach Anspruch 6 oder 7, wobei die Struktur in die Guß- oder Pressform eingelegt wird, wobei beim Gießverfahren die Struktur bevorzugt in die leere Gußform eingelegt und umgossen wird und/oder wobei beim Trockenpressverfahren die Struktur bevorzugt in die Pressform eingelegt wird, nachdem eine erste Lage keramisches Material in die Pressform eingebracht wurde, und weiter bevorzugt durch eine zweite Lage keramisches Material bedeckt wird, oder wobei beim Trockenpressverfahren die Struktur bevorzugt zwischen zwei Lagen keramischen Materials angeordnet und dann in die Pressform eingelegt wird.

9. Verfahren zur Herstellung einer keramischen Filtrationsscheibe, welche einen porösen keramischen Grundkörper und eine auf den Außenseiten des Grundkörpers angeordnete keramische Membran aufweist, wobei die keramische Filtrationsscheibe eine Axialbohrung aufweist, welche den Permeat-Abfluss der Filtrationsscheibe bildet, insbesondere nach einem der vorangegangenen Ansprüche,
**dadurch gekennzeichnet,**
**dass** die Filtrationsscheibe im Bereich der Axialbohrung mit einem Anschlussstück aus Kunststoff versehen wird, mit welchem die Filtrationsscheibe auf eine Welle aufschiebbar ist, wobei das Anschlussstück bevorzugt im Spritzgussverfahren hergestellt wird und/oder mit der Filtrationsscheibe verklemmt und/oder verklebt wird.

10. Filtrationsscheibe mit einem porösen keramischen Grundkörper und einer auf den Außenseiten des Grundkörpers angeordneten keramischen Membran und einer Axialbohrung, welche den Permeat-Abfluss der Filtrationsscheibe bildet, **dadurch gekennzeichnet,**
**dass** der Grundkörper eine Verstärkungsstruktur aus keramischen Fasern aufweist und/oder dass der Grundkörper und/oder die Filtrationsscheibe eine oder mehrere in axialer Richtung verlaufende, bevorzugt durchgehende Löcher aufweist, und/oder dass mindestens eine und bevorzugt beide Seitenflächen des Grundkörpers und/oder der Filtrationsscheibe Erhebungen und/oder Vertiefungen aufweisen, durch welche sich eine über die Erstreckung der Filtrationsscheibe unterschiedliche Dicke der Filtrationsscheibe ergibt, und/oder dass die Filtrationsscheibe im Bereich der Axialbohrung mit einem Anschlussstück aus Kunststoff aufweist.

11. Filtrationsscheibe, insbesondere Filtrationsscheibe nach Anspruch 10, mit einem porösen keramischen Grundkörper und einer auf den Außenseiten des Grundkörpers angeordneten keramischen Membran und einer Axialbohrung, welche den Permeat-Abfluss der Filtrationsscheibe bildet, hergestellt durch ein Verfahren nach einem der Ansprüche 1 bis 9.

12. Filtrationsanlage mit einer drehbaren Welle, auf welcher eine oder mehrere Filtrationsscheiben nach einem der Ansprüche 10 oder 11 angeordnet sind, wobei bevorzugt die Filtrationsscheiben in einem Druckbehälter angeordnet sind, in welchen die zu filternde Flüssigkeit einströmt und/oder aus welchem das Retentat abströmt, und/oder wobei bevorzugt das Permeat über die Axialbohrungen der Filtrationsscheiben und die Welle abfließt.

13. Filtrationsanlage nach Anspruch 12, wobei mehrere Filtrationsscheiben über Anschlussstücke aus Kunststoff auf die Welle aufgeschoben sind, wobei bevorzugt zwischen den Filtrationsscheiben Distanzstücke vorgesehen sind, und/oder wobei bevorzugt der Stapel aus Filtrationsscheiben und/oder Distanzstücken endseitig verspannt ist.
